(19) Europäisches Patentamt / European Patent Office / Office européen des brevets

(11) **EP 1 882 901 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(51) Int Cl.:
***G01C 21/34*** *(2006.01)*

(21) Anmeldenummer: **07112690.8**

(22) Anmeldetag: **18.07.2007**

(54) **Verfahren und Vorrichtung zur Verarbeitung von Fahrtinformationen in einem Fahrzeug**

Method and device for handling of route data in a vehicle

Méthode et dispositif pour la manipulation des données d'itinéraire dans un véhicule

(84) Benannte Vertragsstaaten:
**DE FR GB**

(30) Priorität: **27.07.2006 DE 102006034616**

(43) Veröffentlichungstag der Anmeldung:
**30.01.2008 Patentblatt 2008/05**

(73) Patentinhaber: **Ford-Werke GmbH**
**50735 Köln (DE)**

(72) Erfinder:
• **Etemad, Aria**
**52074 Aachen (DE)**
• **Börger, Marcus**
**8048 Zürich (CH)**

(74) Vertreter: **Dörfler, Thomas**
**Ford-Werke GmbH**
**Abt. NH/364**
**Henry-Ford-Strasse 1**
**50735 Köln (DE)**

(56) Entgegenhaltungen:
EP-A1- 1 551 195     EP-A1- 1 865 287
WO-A1-2006/033560     JP-A- 11 259 794
JP-A- 2006 145 288     US-B1- 6 256 579

**Beschreibung**

Die vorliegende Erfindung betrifft ein Verfahren und eine Vorrichtung zur Verarbeitung von Fahrtinformationen in einem Fahrzeug.

Es sind diverse Ansätze bekannt, um die mittels eines Satellitennavigationssystems (z.B. GPS) in einem Fahrzeug verfügbaren Informationen über die reine Anwendung einer Fahrstreckenvorhersage nach Aktivierung des Navigationssystems durch den Fahrer hinaus zu nutzen.

Beispielsweise ist aus EP 0 697 686 A2 ein Navigationsverfahren bekannt, bei dem die vom aktuellen Standort aus durchgeführten früheren Fahrtrouten bereitgehalten werden, um den Fahrer bei mehrmaliger Zürücklegung derselben Fahrtroute von der Eingabe des Zielortes zu befreien. Hierzu werden die früheren Fahrtrouten dem Fahrer angezeigt und gegebenenfalls nach ihrer Häufigkeit gewichtet. Aus DE 195 35 576 A1 ist es bekannt, zur Minimierung des Eingabeaufwandes durch den Fahrer die jeweilige Zielposition selbsttätig nach Wahrscheinlichkeitsgesichtspunkten anhand gespeicherter Fahrinformationen aus der Vergangenheit abzuleiten.

Aus EP 1 380 813 A1 ist ein Verfahren und eine Vorrichtung zur Bereitstellung von Fahrtinformationen in einem Fahrzeug bekannt, bei dem die beispielsweise GPS-gestützt ermittelten Positionsinformationen gesammelt und in einer Datenbank abgelegt werden, um auf dieser Basis z.B. bei einen späteren Motorstart automatisch eine Fahrstreckenvorhersage durchzuführen und den Fahrer beispielsweise mit hierzu passenden Verkehrsinformationen zu versorgen.

Eine solche Ansammlung von Positionsinformationen erfolgt in herkömmlicher Weise derart, dass vom Start des Fahrzeuges (Standort) bis zum Abschalten des Motors (Ziel) vollständige Fahrtrouten in einer Datenbank abgelegt werden, so dass eine dementsprechend umfangreiche Datenbank erzeugt wird. Zur Erkennung einer Routinefahrt wird das aktuelle Segment, auf dem sich das Fahrzeug momentan befindet, aus der digitalen Karte ausgelesen und mit den Routen in der Datenbank verglichen. Dementsprechend wird ein erheblicher Speicherplatz benötigt und die Datenverarbeitung wird rechenintensiv und kompliziert.

Aus der US 6 256 579 B1 sind ein gattungsgemäßes Verfahren sowie eine Vorrichtung zur Verarbeitung von Fahrtinformationen in einem Fahrzeug bekannt, bei dem bzw. bei der Einzelsegmente von tatsächlich zurückgelegten Fahrtrouten sowie deren Häufigkeit erfasst werden. Falls bei einer Routenplanung Routen mit näherungsweise identischem Start- und/oder Zielpunkt im Vergleich zu den Startoder Zielpunkten von gespeicherten Routen erkannt werden, so wird eine tatsächlich in der Vergangenheit häufiger gefahrene Route bei der Routenplanung bevorzugt.

Aus der im Prioritätszeitraum der vorliegenden Anmeldung veröffentlichten und zum Stand der Technik gemäß Artikel 54(3) EPÜ gehörenden EP 1 865 287 A1 ist ein Navigationssystem bekannt, bei dem Einzelsegmente von bereits zurückgelegten Routen gespeichert werden und so Abweichungen von berechneten Routen auf ihre Plausibilität überprüft werden, um festzustellen, ob der Fahrer eine abweichende Route absichtlich oder versehentlich fährt.

Aus der EP 1 551 195 A1 ist ein automatisches Vorhersagesystem für mögliche Fahrtziele bei einem Navigationssystem bekannt, bei dem die zurückgelegten Streckensegmente - ggf. um zusätzliche Faktoren wie Uhrzeit, Wochentag, Wetter, Jahreszeit ergänzt - gespeichert werden und aus einer anfänglich zurückgelegten Fahrtstrecke, den aktuellen Bedingungen (Zeit, Wochentag etc.) anhand der gespeicherten Fahrtdaten Zielvorschläge unterbreitet werden.

Es ist eine Aufgabe der vorliegenden Erfindung, ein Verfahren und eine Vorrichtung zur Verarbeitung von Fahrtinformationen in einem Fahrzeug bereitzustellen, welche einen geringeren Speicherplatz und Rechenaufwand erfordern.

Diese Aufgabe wird durch ein Verfahren gemäß den Merkmalen des unabhängigen Patentanspruches 1 bzw. eine Vorrichtung gemäß den Merkmalen des unabhängigen Patentanspruches 11 gelöst.

Ein Verfahren zur Verarbeitung von Fahrtinformationen in einem Fahrzeug, wobei während der Zürücklegung jeder Fahrtstrecke durch das Fahrzeug Ortspositionen des Fahrzeuges erfasst und zum Erhalt von diese Fahrtstrecke charakterisierenden Daten verarbeitet werden, weist folgende Schritte auf:

- Zuordnen, für ein vorbestimmtes Streckennetz aus separaten Streckensegmenten, die durch Knotenpunkte voneinander getrennt sind, jeweils einer Kennung zu jedem Streckensegment; und

- Erzeugen eines Datensatzes nach Überschreiten eines Knotenpunktes durch das Fahrzeug, wobei der Datensatz wenigstens ein erstes Datenfeld, welches die Kennung des vor Erreichen des Knotenpunktes von dem Fahrzeug befahrenen Streckensegmentes enthält, und ein zweites Datenfeld, welches die Kennung des nach Erreichen des Knotenpunktes von dem Fahrzeug befahrenen Streckensegmentes enthält, umfasst.

Dabei wird der Datensatz einer Datenbank zugeführt, in welcher er dem vor Erreichen des betreffenden Knotenpunktes von dem Fahrzeug befahrenen Streckensegment zugeordnet wird. Vorzugsweise erfolgt das Erfassen der Ortspositionen satellitennavigationsgestützt, beispielsweise mittels eines GPS-Navigationssystems.

Gemäß der vorliegenden Erfindung wird somit zunächst eine Datenbank aus Streckensegmentübergängen aufgebaut, indem zu jedem Streckensegmentübergang ein Datensatz erzeugt wird. Jeder dieser Datensätze enthält zur Definition des Streckensegmentüberganges das aktuelle Streckensegment (im Folgenden auch Ausgangssegment) sowie das Folgesegment. Aus der Festlegung von Ausgangssegment und Folgesegment ist unmittelbar auch die Fahrtrichtung errechenbar. Die erfindungsgemäß aufgebaute Datenbank enthält somit bereits sämtliche für eine statistische Fahrtstreckenvorhersage notwendigen Informationen. Dadurch, dass diese Information nicht die vollständige Fahrtroute, sondern nur Fragmente enthält, wird der benötigte Speicherplatz und Rechenaufwand wesentlich reduziert.

Gemäß einer bevorzugten Ausführungsform werden die in der Datenbank gespeicherten Datensätze unabhängig voneinander verwaltet. Mit anderen Worten können die Datensätze für eine auf Basis der Datenbank durchgeführte Fahrtstrekkenvorhersage unabhängig voneinander und damit insbesondere auch unabhängig von der Fahrtstrecke, bei deren Befahren sie erzeugt wurden, einzeln und voneinander losgelöst abgerufen und ausgewertet werden. Dies bedeutet, dass insbesondere auch Datensätze, welche bei Befahren unterschiedlicher Fahrtrouten erzeugt wurden, unabhängig von diesen Fahrtrouten gruppiert werden können. Speicherplatz und Rechenzeit können dadurch gespart werden, dass Segmente, die bei mehreren unterschiedliche Fahrtrouten in gleicher Weise durchfahren werden (d.h. mit gleichem Ausgangs- und Zielsegment), prinzipiell nur einmal gespeichert werden müssen. Auch können einzelne Datensätze daraufhin überwacht werden, wie oft das zugehörige Ausgangs- und Folgesegment durchfahren wird. Selten tangierte Datensätze können nach einer bestimmten "Verfallszeit" aus der Datenbank gelöscht werden. Dabei werden nicht notwendigerweise ganze Routen gelöscht, sondern es werden von einer einmal erfassten Route einzelne Datensätze gelöscht, während andere Datensätze dieser Route, die auch im Verlauf anderer Routen tangiert wurden, erhalten bleiben können.

Des Weiteren umfasst jeder nach Passieren eines Knotenpunktes erzeugte Datensatz bevorzugt zwar das Ausgangsstreckensegment und das nach dem Knotenpunkt befahrene Folgesegment, jedoch nicht das vor dem Ausgangsstreckensegment zuletzt befahrene Streckensegment. Die Datenstruktur ist somit einfach verkettet und nicht doppelt (also in Hin- und Rückrichtung) verkettet.

Mittels des Hinzufügens weiterer Datenfelder in den erfindungsgemäß erzeugten Datensätzen kann die Vorhersagequalität weiter verbessert werden oder es können weitere Daten für zusätzliche Anwendungen bereitgestellt werden, auch wenn diese nicht unmittelbar zur reinen Fahrstreckenvorhersage genutzt werden. Für jeden Streckensegmentübergang bzw. Datensatz kann insbesondere eines oder mehrere der folgenden Datenfelder vorgesehen werden: aktueller Fahrer des Fahrzeuges; Tageszeit, zu der das betreffende Streckensegment befahren wurde; Wochentag, an dem das betreffende Streckensegment befahren wurde; die Häufigkeit, mit der von dem betreffenden Streckensegment aus erreichbare Streckensegmente jeweils in der Vergangenheit befahren wurden; Blinkeraktivität des Fahrzeuges; Tankinhalt des Fahrzeuges während des Befahrens des Streckensegments; Wetter, bei dem das betreffende Streckensegment befahren wurde; und aktuelle Verkehrssituation (Vorhandensein von Baustellen etc.).

Insbesondere weist der Datensatz bevorzugt einen sog. Zählwert als zusätzliches Datenfeld auf, wobei der Zählwert eines in der Datenbank gespeicherten Datensatzes dann erhöht wird, wenn das in dem ersten Datenfeld gespeicherte Segment und das im zweiten Datenfeld gespeicherte Folgesegment mit einem aus einer aktuell durchfahrenen Route ermittelten Datensatz übereinstimmen (d.h., gespeicherte Segment und das Folgesegment erneut durchfahren werden), wobei weitere Bedingungen vorgesehen sein können, die für eine Erhöhung des Zählwerts zusätzlich erfüllt sein müssen. Diese Bedingungen können zum einen darin bestehen, dass das gespeicherte "alte" und das gerade durchfahrene "neue" Segment in einer bestimmten zeitlichen Korrelation stehen müssen, z.B. am selben Wochentag oder näherungsweise zur selben Uhrzeit durchfahren worden sein müssen. Auch kann es unter Speicherplatzaspekten sinnvoll sein, den Wertebereich des Zählwertes zu beschränken (z.B. 0 ... 255), so dass dieser bei Erreichen des Maximalwertes nicht weiter erhöht werden kann. Führt das erneute Durchfahren eines Segments mit gleichem Folgesegment zu einer Erhöhung des Zählwertes eines entsprechenden Datensatzes, so erfolgt andererseits eine Verringerung des Zählwertes, wenn ein Datensatz längere Zeit nicht mehr tangiert wurde. Z.B. können sämtliche Zählwerte mit jeder Woche, die seit dem Erzeugen des Datensatzes vergangen ist, um den Wert 1 dekrementiert werden. Wird bei einem Datensatz ein vorgegebener Schwellwert (z.B. 0) erreicht bzw. unterschritten, so kann der Datensatz gelöscht werden. D.h., dass das "Gedächtnis" der Datenbank für einmalig oder sehr selten genutzte Routen (bzw. einzelne Routenabschnitte) verblasst.

Im Rahmen der Erfindung wird während der Zurücklegung einer Fahrtstrecke durch das Fahrzeug eine Fahrtstreckenvorhersage durchgeführt, indem für jedes aktuell von dem Fahrzeug befahrene Streckensegment ein auf Basis der Datenbank unter Wahrscheinlichkeitsgesichtspunkten zu erwartendes nachfolgendes Streckensegment ermittelt wird.

Gemäß einer bevorzugten Ausführungsform werden bei dem Ermitteln des unter Wahrscheinlichkeitsgesichtspunkten zu erwartenden nachfolgenden Streckensegments nur diejenigen Datensätze der Datenbank herangezogen, bei denen der Inhalt des ersten Datenfeldes mit der Kennung des aktuell von dem Fahrzeug befahrenen Streckensegments übereinstimmt. Ferner werden vorzugsweise nur diejenigen Datensätze der Datenbank herangezogen, bei denen der Inhalt des zweiten Datenfeldes mit der Kennung zumindest eines von dem aktuell von dem Fahrzeug befahrenen Streckensegment aus unter Berücksichtigung der der aktuellen Fahrtrichtung durch das Fahrzeug unmittelbar erreichbaren Streckensegments übereinstimmt. Diese Maßnahmen tragen jeweils vorteilhaft zur Minimierung des Rechenauf-

wandes bei, da von vornherein die Anzahl der aus der Datenbank herangezogenen Datensätze sinnvoll bzw. weitestgehend begrenzt wird.

Bei dem Ermitteln des zu unter Wahrscheinlichkeitsgesichtspunkten zu erwartenden nachfolgenden Streckensegments wird jedem der aus der Datenbank herangezogenen Datensätze eine Wahrscheinlichkeit (W), insbesondere nach der Vorschrift

$$ W \quad := \sum_i p_i \ast \alpha_i \quad ; \quad \sum_i \alpha_i \ = \ 1 $$

zugeordnet, wobei jeder Term $p_i \ast \alpha_i$ jeweils einen mit einem Gewichtungswert $\alpha_i$ gewichteten Wahrscheinlichkeitswert $p_i$ angibt, wobei der Wahrscheinlichkeitswert $p_i$ auf Basis eines Vergleichs eines Datenfeldes des jeweiligen aus der Datenbank herangezogenen Datensatzes mit dem entsprechenden Datenfeld des aktuell von dem Fahrzeug befahrenen Streckensegments ermittelt wird.

Gemäß einer bevorzugten Ausführungsform wird das Verfahren unabhängig davon durchgeführt, ob ein Navigationssystem des Fahrzeuges durch den Fahrer aktiviert ist. Dies hat den Vorteil, dass hinsichtlich des Aufbaus der Datenbank sämtliche von dem Fahrzeug befahrene Routen erfasst werden. Im Zusammenhang mit der Fahrtstreckenvorhersage ergibt sich der Vorteil, dass auch auf Routinefahrten, die üblicherweise einen Großteil der Fahrten ausmachen, während derer der Fahrer selbst eine Zielführung nicht benötigt und das Navigationssystem daher in der Regel nicht aktiviert, die mittels der Fahrtstreckenvorhersage erhaltene Information vorteilhaft zur Optimierung des Verhaltens der Motorsteuerung, zur Erhöhung der Lebensdauer der Batterie oder von Fahrzeugsystemen, wie z.B. einem Spurhaltesystem, bereitgestellt und verwendet werden kann.

Die Erfindung betrifft weiter eine Vorrichtung zur Verarbeitung von Fahrtinformationen in einem Fahrzeug, welche zur Durchführung eines Verfahrens mit den oben beschriebenen Merkmalen ausgebildet ist.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen erläutert. Es zeigen:

Figur 1    ein Schaubild zur Veranschaulichung einer erfindungsgemäßen Aufteilung eines Bereichs einer in einem Navigationssystem gespeicherten Straßenkarte in einzelne Streckensegmente;

Figur 2    ein Schaubild zur Erläuterung des Aufbaus einer erfindungsgemäßen Datenbank sowie des Mindestinhalts der hierzu während einer Fahrt erzeugten Datensätze;

Figur 3    ein Schaubild zur Erläuterung des Aufbaus eines Datensatzes mit weiteren Datenfeldern gemäß einer bevorzugten Ausführungsform der Erfindung;

Figur 4    ein Flussdiagramm zur Erläuterung des prinzipiellen Ablaufes einer Streckenvorhersage gemäß einer Ausführungsform der Erfindung; und

Figur 5    die graphische Darstellung einer gemäß einer Aisführungsform der Erfindung verwendeten Funktion zur Ermittlung eines Zählwertes zur Berücksichtigung des Alters und der Häufigkeit des Befahrens von Segmentübergängen.

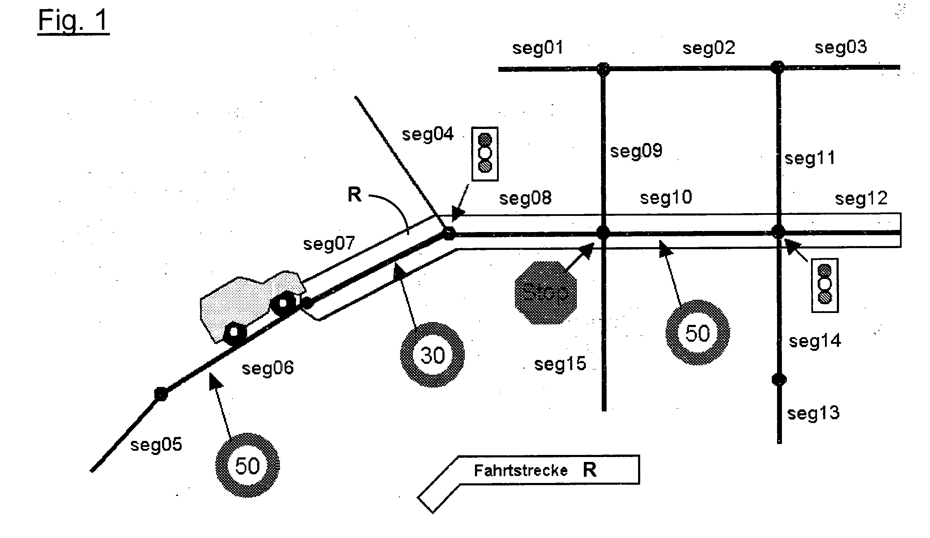

Zur Veranschaulichung ist in Fig. 1 anhand eines Schaubildes schematisch dargestellt, wie eine im Navigationssystem in digitaler Form gespeicherte Straßenkarte in einzelne Streckensegmente zerlegt werden kann. Den einzelnen Streckensegmenten ist jeweils eine Nennung "seg01", "seg02",... zugeordnet, wobei diese Streckensegmente seg01, seg02,... jeweils durch ebenfalls eingezeichnete Knotenpunkte voneinander getrennt sind. Die Fahrtstrecke mit der größten Wahrscheinlichkeit ist eingerahmt und mit "R" bezeichnet.

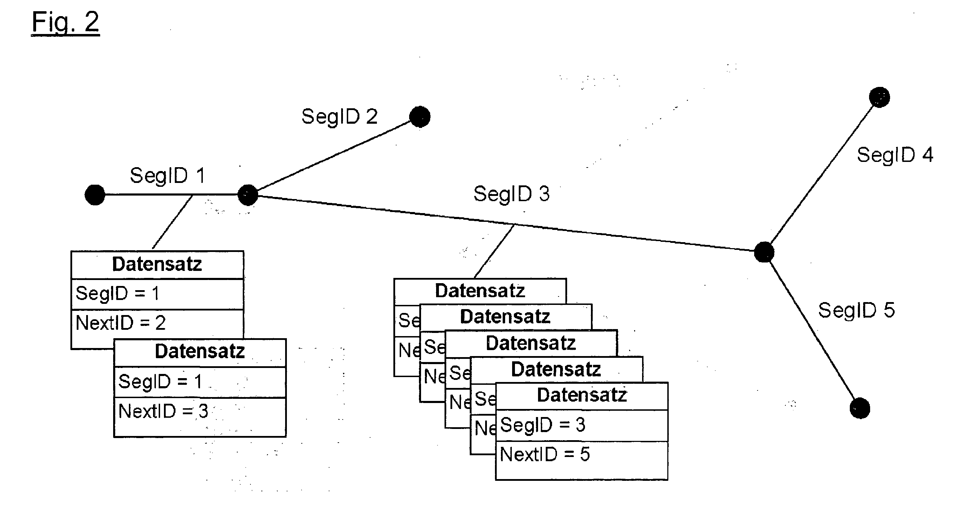

Während der Zurücklegung einer Fahrtstrecke werden nun erfindungsgemäß zum Aufbau einer - insbesondere zur Fahrstreckenvorhersage geeigneten - Datenbank Datensätze an den einzelnen Knotenpunkten (d.h. an jedem Übergang zwischen Streckensegmenten) erzeugt, wobei ein beispielhafter Aufbau dieser Datenbank nachfolgend unter Bezugnahme auf Fig. 2 erläutert wird.

Gemäß Fig. 2 verzweigt sich das Streckensegment mit einer hier als SegID 1 bezeichneten Kennung an einem Knotenpunkt in Streckensegmente SegID 2 und SegID 3. Bei jeder Fahrt auf SegID 1 wird für den Übergang auf SegID 2 ein neuer Datensatz angelegt. Ebenso wird bei jeder Fahrt auf SegID 1 für den Übergang auf SegID 3 ein neuer Datensatz angelegt. Gleiches gilt auch für alle weiteren Übergänge zwischen aufeinander folgenden Streckensegmenten.

Jeder in dieser Weise nach Passieren eines Knotenpunktes erzeugte Datensatz enthält ais Mindestinhalt sowohl die Kennung des Ausgangssegmentes, also im zuvor genannten Beispiel SegID 1, als auch die Kennung des Folgesegmentes ("NextID"), also im zuvor genannten Beispiel SegID 2 bzw. SegID 3.

Gemäß dem Beispiel von Fig. 2 werden in einer bevorzugten Ausführungsform außer dem jeweiligen Ausgangssegment und dem Folgesegment für jeden Streckensegmentübergang zur Minimierung des Speicherbedarfs und des Rechenaufwandes in der Datenbank keine weiteren Daten zur unmittelbaren Charakterisierung der jeweils von dem Fahrzeug zurückgelegten Fahrtstrecke gespeichert, insbesondere nicht die Segment-ID des jeweils vorher befahrenen Segmentes. Diese Datenbank enthält bereits sämtliche für eine statistische Fahrtstreckenvorhersage notwendigen Informationen.

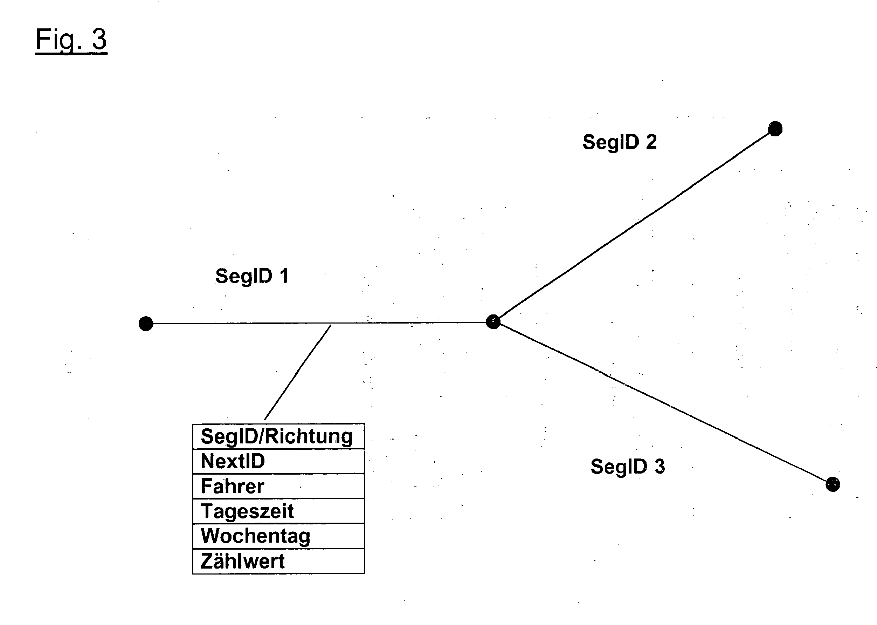

Im Weiteren wird unter Bezugnahme auf Fig. 3 anhand eines bevorzugten Ausführungsbeispiels die Struktur einer erfindungsgemäß erstellten Datenbank erläutert, bei der jeder Datensatz weitere Datenfelder zur Optimierung der Vorhersagequalität enthält.

Demnach enthält jeder Datensatz zusätzlich zu dem ersten Datenfeld (enthaltend die Kennung des Ausgangssegmentes SegID und die Fahrtrichtung) und dem zweiten Datenfeld (enthaltend das Folgesegment NextID) ferner eines oder mehrere weitere Datenfelder, welche jeweils eine Kenngröße zur Charakterisierung folgender Zustandsparameter enthalten:

a) aktueller Fahrer des Fahrzeuges;

b) Tageszeit, zu der das betreffende Streckensegment befahren wurde;

c) Wochentag, an dem das betreffende Streckensegment befahren wurde; und

d) eine Kennzahl für die Häufigkeit, mit der von dem betreffenden Streckensegment aus erreichbare Streckensegmente jeweils in der Vergangenheit befahren wurden.

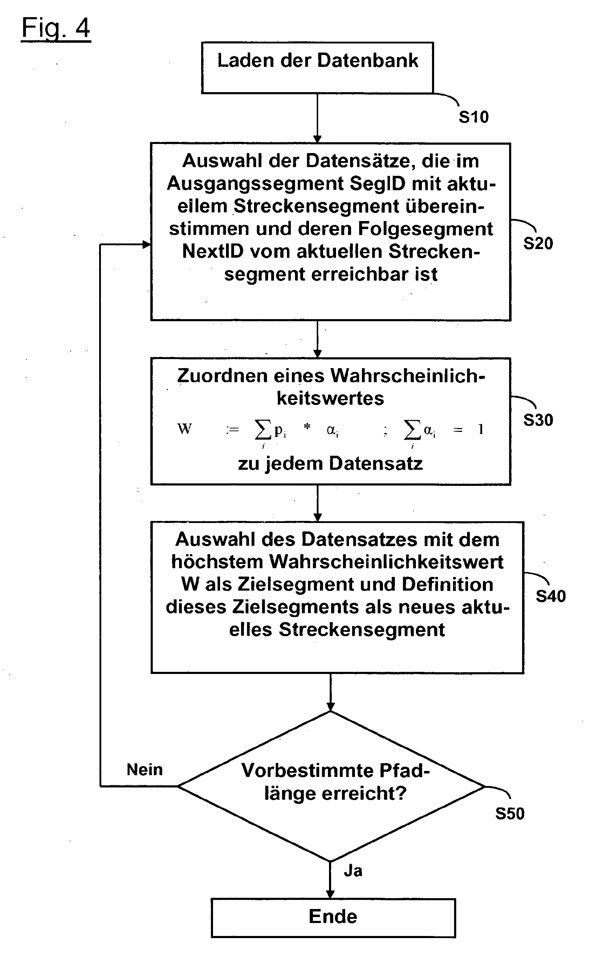

Im Weiteren wird die Nutzung der gemäß dem Beispiel von Fig. 3 aufgebauten Datenbank für eine Fahrtstreckenvorhersage unter Bezugnahme auf das in Fig. 4 dargestellte Flussdiagramm beschrieben:

Bei Beginn einer neuen Fahrt wird im Schritt S10 die auf den vergangenen Fahrten des Fahrzeugs aufgebaute Datenbank geladen.

Während der Fahrt wird ein Vergleich des aktuellen Streckensegments (sowie ggf. der aktuellen Fahrtrichtung) mit sämtlichen Datensätzen in der Datenbank durchgeführt. Dabei werden in einem Schritt S20 von diesen Datensätzen der Datenbank diejenigen ausgewählt, welche das gleiche Ausgangssegment aufweisen und deren Folgesegment unter Berücksichtigung der aktuellen Fahrtrichtung vom tatsächlichen aktuellen Streckensegment aus erreichbar ist.

Dann wird in einem Schritt S30 jedem der aus der Datenbank herangezogenen Datensätze eine Wahrscheinlichkeit (W) nach der Vorschrift

$$W := \sum_i p_i * \alpha_i \quad ; \quad \sum_i \alpha_i = 1$$

zugeordnet. Jeder Term $p_i * \alpha_i$ gibt hierbei einen mit einem Gewichtungswert $\alpha_i$ gewichteten Wahrscheinlichkeitswert $p_i$ an.

Dabei werden die Wahrscheinlichkeitswerte $p_i$ auf Basis eines Vergleichs eines Datenfeldes des jeweiligen aus der Datenbank herangezogenen Datensatzes mit dem entsprechenden Datenfeld des aktuell von dem Fahrzeug befahrenen Streckensegments ermittelt. Ferner werden diese Wahrscheinlichkeitswerte $p_i$ jeweils mit einem Gewichtungswert $\alpha_i$ multipliziert, wobei sämtliche Gewichtungswerte $\alpha_i$ einen Wert zwischen 0 und 1 aufweisen und wobei die Summe der Gewichtungswerte $\alpha_i$ Eins beträgt. Zur Steigerung der Vorhersagequalität kann der Algorithmus somit mit unterschiedlichen Gewichtungen konfiguriert werden.

Gemäß dem vorliegenden Ausführungsbeispiel enthalten die zur Ermittlung der Wahrscheinlichkeitswerte $p_i$ ausgewerteten Datenfelder der herangezogenen Datensätze Kenngrößen zur Charakterisierung der oben unter a) bis d) genannten Parameter, d.h. sie betreffen den aktuellen Fahrer des Fahrzeuges (zugehöriger Wahrscheinlichkeitswert: $p_{FID}$), die Tageszeit, zu der das betreffende Streckensegment befahren wurde (zugehöriger Wahrscheinlichkeitswert: $p_{TIM}$), den Wochentag, an dem das betreffende Streckensegment befahren wurde (zugehöriger Wahrscheinlichkeitswert: $p_{DOW}$), und die Häufigkeit, mit der von dem betreffenden Streckensegment aus erreichbare Streckensegmente jeweils in der Vergangenheit befahren wurden (zugehöriger Wahrscheinlichkeitswert: $p_{CNT}$). Diese vier Wahrscheinlichkeitswerte $p_i$ werden mittels folgender Rechenvorschriften ermittelt (zu den Definitionen und Wertebereichen der Größen siehe unten):

$$p_{CNT} \; := \; \frac{100\%}{(256 \; - \; CNT)}$$

$$p_{DOW} \; := \; \frac{100\%}{(1 \; + \; \Delta DOW)}$$

$$p_{TIM} \; := \; \frac{100\%}{(1 \; + \; \Delta TIM)}$$

$$p_{FID} \; := \; 100\% \; * \; FID$$

Für jeden herangezogenen Datensatz ergibt sich somit nach dem Schritt S30 ein Wahrscheinlichkeitswert W (im Bereich von 0% bis 100%), mit

$$W \; := \; \sum_i p_i \; * \; \alpha_i \qquad : \; \sum_i \alpha_i \; = \; 1 \quad, \; i \in \{CNT, DOW, TIM, FID\}$$

Im nächsten Schritt S40 wird der Datensatz mit der höchsten Wahrscheinlichkeit W ausgewählt, um das nächste Zielsegment festzulegen. Dies erfolgt solange, bis (gemäß Abfrage in Schritt S50) entweder eine vorbestimmte Pfadlänge oder Fahrtzeit überschritten oder die verfügbare Rechenzeit aufgebraucht wurde. Somit werden die obigen Schritte S20-S50 unter Definition des so festgelegten Zielsegmentes als Ausgangssegment für einen erneuten Vergleich mit sämtlichen Datensätzen der Datenbank bis zum Erreichen der vorbestimmten Pfadlänge oder Fahrtzeit wiederholt.
Nachfolgend werden die obigen Beziehungen für die Wahrscheinlichkeitswerte $p_i$ näher erläutert:

Zu $p_{FID}$:     Wenn der aktuelle Fahrer dem im Datensatz gespeicherten Fahrer entspricht, dann wird diesem Datensatz der Wert FID=1 und ansonsten der Wert 0 zugeordnet, wobei entsprechend der Wahrscheinlichkeitswert mittels 100% * FID errechnet wird. Die Identifikation des Fahrers kann die Vorauswahl der in Frage kommenden Datensätze einschränken und somit die Wiedererkennung der von dem Fahrer beabsichtigten Route beschleunigen, da Datensätze anderer Fahrer gar nicht erst in Betracht gezogen bzw. in die Datenbank geladen werden müssen. Es ist auch möglich, Fahrergruppen anzulegen und bei Zugehörigkeit einen Wert zwischen 0 und 1 anzunehmen. Eine zusätzliche Einstellung erlaubt, nur solche Datensätze zu berücksichtigen, die vom aktuellen Fahrer oder den Gruppen, denen er angehört, stammen.

Zu $p_{DOW}$:     $\Delta DOW$ bezeichnet die Differenz zwischen den zu vergleichenden Wochentagen (d.h. zwischen dem aktuellen Wochentag und dem im jeweils herangezogenen Datensatz gespeicherten Wochentag), denen jeweils die Kennzahlen 0-6 zugeordnet werden. Dabei wird im Hinblick auf die mögliche Abzählung dieser Differenz in die Zukunft bzw. in die Vergangenheit jeweils der kleinere der beiden möglichen Differenzwerte als Wert für $\Delta DOW$ gesetzt (d.h. bei Vergleich der Wochentage Donnerstag und Sonntag ergibt sich für $\Delta DOW$ der Wert 3 (und nicht 4). Eine Gliederung der Wochentage in Arbeitstag und Feiertag/Wochenende kann zusätzlich die Suche nach den passenderen Datensätzen beschleunigen.

Zu $p_{TIM}$:     Bei der Ermittlung von $\Delta TIM$ wird grundsätzlich wie bei der Ermittlung von $\Delta DOW$ verfahren, d.h. es wird auch hier die kürzere Zeitdifferenz genutzt und als $\Delta TIM$ bezeichnet. Zur einfacheren Handhabung und Klassifizierung der Datensätze kann auf eine genaue Speicherung der Uhrzeit verzichtet werden. Ein 24-Stundentag (1440 Minuten) kann beispielsweise in 144 "Zeitscheiben" zu je 10 Minuten aufgeteilt und anstelle der Uhrzeit die zugehörige Intervallsnummer [0..143] eingetragen werden. Bei der Berechnung von $\Delta TIM$ werden die Wochentage berücksichtigt, und es wird geprüft, ob es sich um einen Übergang von einem zum nächsten Tag handelt; so resultieren etwa Dienstag 23:50 und Mittwoch 0:05 in einer Zeitdifferenz von 0:15. Wenn die Differenz vom ersten Tag zum zweiten Tag kleiner als die Differenz in die andere Richtung ist, wird ΔDOW um eins dekrementiert, also gleich null gesetzt. Werden etwa Donnerstag 22:17 und Mittwoch 11:00 verglichen, so ist die kürzere Zeitdifferenz gleich 11:17. Da die kürzere Zeitdifferenz hier nicht durch den Übergang vom einen zum nächsten Tag erreicht wird, wird auch ΔDOW nicht dekrementiert. Denn hierbei wurde der Tag nicht berücksichtigt und stattdessen nur die beiden Zeiten verglichen, als wären sie am selben Tag gemessen worden. Die maximale Differenz ist abhängig von der Länge der gewählten Zeitintervalle. In der vorliegenden Implementierung werden 10 Minuten Intervalle verwendet. Es ergeben sich also 6 * 24 = 144 Zeitintervalle à 10 Minuten und somit eine maximale Differenz ΔTIM von 72 und damit die Zuordnung 100%/(1 + ΔTIM).

Zu $p_{CNT}$:    CNT bezeichnet einen <u>Zählwert</u>, der als interne Bewertung der Datensätze eingesetzt werden kann, um die Häufigkeit des Befahrens eines Segmentüberganges und das Alter des jeweiligen Segmentüberganges zu berücksichtigen. Hierzu können die Segmentübergänge zusätzlich zu SegID und NextID nach Zeitintervall und Wochentag gruppiert werden, wobei die Zählwerte zu gruppierender Datensätze addiert oder mit Hilfe einer Funktion errechnet werden. Für diese Funktion f(x) a*x+b kann ein linearer Zusammenhang f(x)= a*x+b gewählt werden. Für den Fall (a=1, b=0) entspricht dies einem einfachen Addieren der zu gruppierenden Datensätze nach SegID und NextID sowie Zeitintervall und Wochentag.

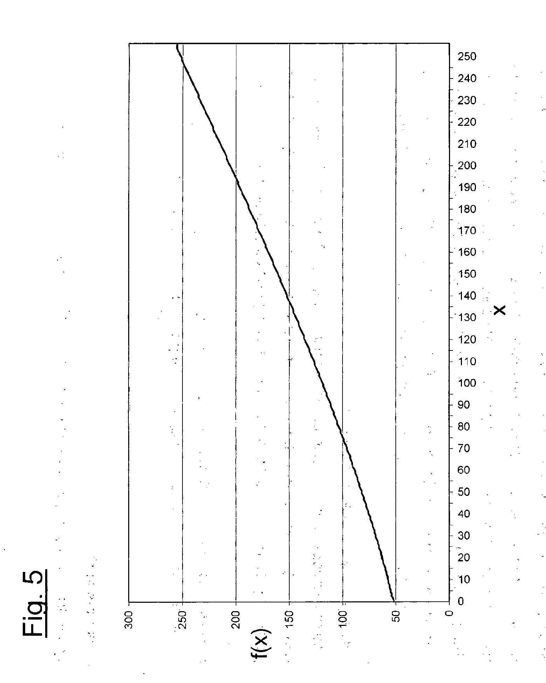

Des Weiteren kann für die Funktion auch ein nichtlinearer Zusammenhang gewählt werden. Ein Beispiel für einen solchen nichtlinearen Zusammenhang bildet etwa die in Fig. 5 graphisch dargestellte Funktion

$$f(x) \; := \; round\left( \frac{a}{e^{x*b}} + c \right)$$

mit

$$x \in [0;255] \quad a,b,c \in \Re \quad a = 56 \quad b = 0,009 \quad c = -3,5$$

Diese stetig steigende Funktion mit einem Wertebereich von 0 bis 255 kann vorteilhaft vorberechnet in einem Tabellenspeicher mit einer Größe von nur 256 Bytes abgelegt werden. Zur Berechnung des Zählwertes anhand einer derartigen Funktion erfolgt, wie vorstehend ausgeführt, zunächst eine Gruppierung der Datensätze - zusätzlich zu SegID und NextID - nach Zeitintervall und Wochentag (eine Gruppierung nach weiteren Kriterien ist möglich). Bei Datensätzen, die mit einem aktuell durch die Fahrtroute erzeugten Datensatz hinsichtlich SegID und NextID übereinstimmen, und die auch hinsichtlich Zeitintervall und Wochentag übereinstimmen oder bestimmte Ähnlichkeitskriterien (maximale Zeit- oder Wochentagsdifferenz) erfüllen, wird dann eine Aktualisierung, d.h. Erhöhung des jeweiligen Zählwertes vorgenommen, indem die o.g. Funktion f(x) auf den jeweils letzten in dem Datensatz gespeicherten Zählwert angewendet wird. Die Zählwerte der Datensätze werden andererseits jede Woche um einen Zählpunkt dekrementiert, so dass sich - je nach Häufigkeit und Intervall zwischen dem Durchfahren eines Segmentes - steigende bzw. fallende Zählwerte ergeben.

Wie aus Fig. 5 ersichtlich, werden bei Verwendung einer nicht linearen Funktion f(x) kleinere Werte für x stärker inkrementiert als größere Werte für x. Dabei wird davon ausgegangen, dass die beispielsweise nach einer Woche erfolgende Wiederkehr eines bestimmten Datensatzes bzw. Segmentüberganges eine gewisse Regelmäßigkeit vermuten lässt, die in einer entsprechen hohen anfänglichen Steigerung des Zählwertes bei der Gruppierung zum Ausdruck kommt. Im vorliegenden Falle ergibt sich eine Erhöhung des Zählwertes nach einmaliger Wiederkehr des Segmentüberganges auf einen Wert von CNT=84, bei zweimaliger Wiederkehr auf einen Wert von CNT=107 etc. Mit jeder Woche, in der ein Ereignis bzw. Segmentübergang nicht stattfindet, wird der Zählwert um Eins dekrementiert. Datensätze, deren Wert kleiner als Eins wird, werden aus der Datenbank entfernt. Mit den oben angegebenen Parametern a, b, c erreicht die Funktion f(x) für wöchentlich wiederkehrende Ereignisse bzw. Segmentübergänge nach 34 Wochen das Maximum von 255. Ein Ereignis, das alle zwei Wochen wiederholt wird, erreicht nach 86 Wochen ein Maximum von 251. Da in jeder zweiten Woche das Ereignis nicht stattfindet, wird der Zählwert um eins dekrementiert, so dass der Wert zwischen 251 und 250 schwankt. Für Ereignisse, die einmal im Monat wiederholt werden, wird ein Maximum von 221 und ein Minimum von 218 nach 136 Wochen erreicht. Für die Berechnung der Wahrscheinlichkeit aus dem Wert CNT wird die Rechenvorschrift 100% / (256 - CNT) herangezogen. Da die o.g. Funktion einen Ausgangswert f(0)=52 aufweist, dauert es 52 Wochen (=52 Dekrementierungen), d.h. ein Jahr, bis eine nur einmalig durchfahrene Route (bzw. die entsprechenden Datensätze der Teilsegmente) aus der Datenbank gelöscht werden.

In Tabelle 1 ist zur Abschätzung einer typischen, gemäß der Erfindung erzeugten Datensatzgröße ein weiterer beispielhafter Aufbau eines Datensatzes für eine erfindungsgemäß aufgebaute Datenbank gemäß einer weiteren Ausführungsform dargestellt:

Tabelle 1:

| Datenfeld | Größe | Information |
|---|---|---|
| SegID | 64 Bit | Startsegment |
| NextID | 64 Bit | Zielsegment |
| Fahrer | 8 Bit; 0 .. 255 | Identifikation des Fahrers |
| Zählwert | 8 Bit, 0 .. 255 | Interne Bewertung (0 = Löschen, 1 = Min, 255 = Max) |
| Zeitintervall | 8 Bit; 0 .. 143 | 10 min/Tag |
| Wochentag | 3 Bit; 0 .. 6 | 0 = So, 1 = Mo, ... 6 = Sa |
| Start | 1 Bit | Segment kennzeichnet Beginn einer Fahrt |
| Stop | 1 Bit | Segment kennzeichnet Ende einer Fahrt |
| Richtung | 1 Bit | Fahrtrichtung auf Startsegment |
| Arbeitstag | 1 Bit | Fahrt an einem Arbeitstag |
| Modifiziert | 1 Bit | Datensatz wurde manuell modifiziert |
| Reisezeit | 16 Bit | Fahrtzeit auf Startsegment [10ms] |

Bei dem Datensatz von Tabelle 1 sind die "Start-" und die "Stop-"Information Kennzeichnungen dafür, ob es sich beim betrachteten Segment um ein Segment handelt, von dem eine Fahrt gestartet (Beginn einer Fahrt) oder auf dem eine Fahrt beendet (Ziel einer Fahrt) worden ist. Anhand der Stop-Information können mögliche Ziele vorhergesagt werden. Dazu wird solange ein nächstes Segment gesucht, bis ein passender Segmentübergang mit Stop-Kennzeichnung gefunden wird. Dabei bedeutet "passend", dass man die Tageszeit und den Wochentag berücksichtigt und daraus eine Wahrscheinlichkeit für das mögliche Ziel herleitet und es mit der Wahrscheinlichkeit vergleicht, dass man unter Berücksichtigung aller Daten nicht anhalten wird.

Ferner bezeichnet bei dem Datensatz von Tabelle 1 "Richtung" eine Kennzeichnung für die Fahrtrichtung auf dem betreffenden Straßensegment. Jedes Straßensegment in der digitalen Karte besitzt einen Eingangs- und einen Ausgangsknoten. Richtung legt fest, in welcher Reihenfolge das Straßensegment beim gespeicherten Datensatz befahren worden ist. Dies wirkt bei der Erkennung der Route wie ein Filter und führt dazu, dass nur die Datensätze in Betracht gezogen werden, deren Richtungen mit der aktuellen Fahrtrichtung übereinstimmen.

Ferner bezeichnet bei dem Datensatz von Tabelle 1 "Reisezeit" die durchschnittliche Reisezeit auf dem Straßensegment, also die Zeit, die benötigt wird, um das jeweilige Streckensegment vom Eingangs- bis zum Ausgangsknoten zu befahren. Die Berücksichtigung der Reisezeit kann bei der Auswahl der Datensätze für längere Routen dazu beitragen, die Datensätze mit der richtigen Zeit bzw. dem richtigen Zeitintervall zu berücksichtigen. Um die richtige Zeit bei der Ankunft auf einem "entfernten" Segment abzuschätzen, werden alle Reisezeiten zwischen dem aktuellen Segment und allen vorhergesagten Segmentübergängen zu der aktuellen Uhrzeit addiert. Mit Hilfe der "richtigen" Tageszeit können die passenden Datensätze berücksichtigt werden, wodurch die Wahrscheinlichkeit der Vorhersage erhöht wird. Zur Vereinfachung kann statt der Fahrtzeit vom Eingangs- bis zum Ausgangsknoten auch die Zeit gespeichert werden, die bis zum Erreichen des nächsten Segmentes vergeht.

Gemäß dem Ausführungsbeispiel von Tabelle 1 ist jeder Datensatz 176 Bit bzw. 22 Byte groß. Als realistischer Wert für die Anzahl von befahrenen Streckensegmenten kann beispielsweise eine Zahl von 6 angenommen werden. Für einen typischen Fahrer sollte ein Speicherplatz von 5 Megabyte für eine Dauer von 3 Jahren ausreichend sein. Ein Fahrer, welcher ausschließlich und regelmäßig kurze Strecken befährt, sollte auch für längere Zeiträume mit etwa 1 Megabyte auskommen.

Eine weitere Ersparnis ergibt sich, wenn nur solche Segmentübergänge gespeichert werden, auf Grund derer eine Entscheidung beeinflusst werden kann. Im Allgemeinen enthält die Datenbank mehr Segmentübergänge, als dies zur Speicherung von reinen Abbiegesituationen notwendig ist. Außerdem ist es nicht zwingend erforderlich, Segmentübergänge zu speichern, bei denen auf Grund der Befahrbarkeit nur eines der theoretisch möglichen Zielsegmente in Frage kommt. Eine derartige Vereinfachung hat jedoch den Nachteil, dass Zusatzinformationen nicht detailliert gespeichert und zugeordnet werden können.

**Patentansprüche**

1. Verfahren zur Verarbeitung von Fahrtinformationen in einem Fahrzeug, wobei während der Zurücklegung jeder Fahrtstrecke durch das Fahrzeug Ortspositionen des Fahrzeuges erfasst und zum Erhalt von diese Fahrtstrecke charakterisierenden Daten verarbeitet werden,
   wobei das Verfahren folgende Schritte aufweist:

   Zuordnen, für ein vorbestimmtes Streckennetz aus separaten Streckensegmenten, die durch Knotenpunkte voneinander getrennt sind, jeweils einer Kennung zu jedem Streckensegment; und
   Erzeugen eines Datensatzes nach Überschreiten eines Knotenpunktes durch das Fahrzeug, wobei der Datensatz wenigstens ein erstes Datenfeld, welches die Kennung des vor Erreichen des Knotenpunktes von dem Fahrzeug befahrenen Streckensegmentes enthält, und ein zweites Datenfeld, welches die Kennung des nach Erreichen des Knotenpunktes von dem Fahrzeug befahrenen Streckensegmentes enthält, umfasst,
   wobei der Datensatz einer Datenbank zugeführt wird, in welcher er dem vor Erreichen des betreffenden Knotenpunktes von dem Fahrzeug befahrenen Streckensegment zugeordnet wird,

   **dadurch gekennzeichnet, dass**

   während der Zurücklegung einer Fahrtstrecke durch das Fahrzeug eine Fahrtstreckenvorhersage durchgeführt wird, indem für jedes aktuell von dem Fahrzeug befahrene Streckensegment ein auf Basis der Datenbank unter Wahrscheinlichkeitsgesichtspunkten zu erwartendes nachfolgendes Streckensegment ermittelt wird, wobei bei dem Ermitteln des unter Wahrscheinlichkeitsgesichtspunkten zu erwartenden nachfolgenden Streckensegments jedem der aus der Datenbank herangezogenen Datensätze eine Wahrscheinlichkeit zugeordnet wird.

2. Verfahren nach Anspruch 1,
   **dadurch gekennzeichnet, dass**
   die in der Datenbank gespeicherten Datensätze unabhängig voneinander verwaltet werden, so dass sie unabhängig von der jeweiligen Fahrtstrecke,
   bei deren Befahren sie erzeugt wurden, abrufbar bzw. auswertbar sind.

3. Verfahren nach Anspruch 1 oder 2,
   **dadurch gekennzeichnet, dass**
   der Datensatz ferner eines oder mehrere weitere Datenfelder umfasst, welche jeweils eine Kenngröße zur Charakterisierung einer der folgenden Zustandsparameter enthalten:

   a) aktueller Fahrer des Fahrzeuges;
   b) Tageszeit, zu der das betreffende Streckensegment befahren wurde;
   c) Wochentag, an dem das betreffende Streckensegment befahren wurde;
   d) die Häufigkeit, mit der von dem betreffenden Streckensegment aus erreichbare Streckensegmente jeweils in der Vergangenheit befahren wurden und/oder der Zeitraum, der seit dem letzten Befahren des Streckensegments vergangen ist;
   e) Blinkeraktivität des Fahrzeuges;
   f) Tankinhalt des Fahrzeuges während des Befahrens des Streckensegments;
   g) Wetter, bei dem das betreffende Streckensegment befahren wurde; und
   h) aktuelle Verkehrssituation (Vorhandensein von Baustellen etc.).

4. Verfahren nach einem der Ansprüche 1 bis 3,
   **dadurch gekennzeichnet, dass**
   der Datensatz ferner einen Zählwert als zusätzliches Datenfeld umfasst, wobei der Zählwert eines in der Datenbank gespeicherten Datensatzes dann erhöht wird, wenn das in dem ersten Datenfeld gespeicherte Segment und das im zweiten Datenfeld gespeicherte Folgesegment mit einem aus einer aktuell durchfahrenen Route ermittelten Datensatz übereinstimmen,
   wobei weitere Bedingungen vorgesehen sein können, die für eine Erhöhung des Zählwerts zusätzlich erfüllt sein müssen.

5. Verfahren nach Anspruch 4,
   **dadurch gekennzeichnet, dass**
   der Zählwert der Datensätze abhängig vom Alter der Datensätze verringert wird, wobei bei Unterschreiten eines vorgegebenen Schwellwertes für den Zählwert der entsprechende Datensatz gelöscht wird.

6. Verfahren nach einem der Ansprüche 1 bis 5,
   **dadurch gekennzeichnet, dass**
   bei dem Ermitteln des unter Wahrscheinlichkeitsgesichtspunkten zu erwartenden nachfolgenden Streckensegments nur diejenigen Datensätze der Datenbank herangezogen werden, bei denen der Inhalt des ersten Datenfeldes mit der Kennung des aktuell von dem Fahrzeug befahrenen Streckensegments übereinstimmt.

7. Verfahren nach Anspruch 6,
   **dadurch gekennzeichnet, dass**
   bei dem Ermitteln des unter Wahrscheinlichkeitsgesichtspunkten zu erwartenden nachfolgenden Streckensegments nur diejenigen Datensätze der Datenbank herangezogen werden, bei denen der Inhalt des zweiten Datenfeldes mit der Kennung zumindest eines von dem aktuell von dem Fahrzeug befahrenen Streckensegment aus unter Berücksichtigung der der aktuellen Fahrtrichtung durch das Fahrzeug unmittelbar erreichbaren Streckensegments übereinstimmt.

8. Verfahren nach Anspruch 6 oder 7,
   **dadurch gekennzeichnet, dass**
   bei dem Ermitteln des unter Wahrscheinlichkeitsgesichtspunkten zu erwartenden nachfolgenden Streckensegments jedem der aus der Datenbank herangezogenen Datensätze eine Wahrscheinlichkeit (W) nach der Vorschrift

$$W := \sum_i p_i * \alpha_i \quad ; \quad \sum_i \alpha_i = 1$$

zugeordnet wird, wobei jeder Term $p_i*\alpha_i$ jeweils einen mit einem Gewichtungswert $\alpha_i$ gewichteten Wahrscheinlichkeitswert $p_i$ angibt, wobei der Wahrscheinlichkeitswert $p_i$ auf Basis eines Vergleichs eines Datenfeldes des jeweiligen aus der Datenbank herangezogenen Datensatzes mit dem entsprechenden Datenfeld des aktuell von dem Fahrzeug befahrenen Streckensegments ermittelt wird.

9. Verfahren nach einem der vorhergehenden Ansprüche, **dadurch gekennzeichnet, dass**
   das Verfahren unabhängig davon durchgeführt wird, ob ein Navigationssystem des Fahrzeuges durch den Fahrer aktiviert ist.

10. Verfahren nach einem der Ansprüche 1 bis 9,
    **dadurch gekennzeichnet, dass**
    auf Basis der Fahrtstreckenvorhersage wenigstens eine der nachfolgenden Anwendungen gesteuert wird:

    a) Tempomat
    b) Warneinrichtung vor zu hoher Geschwindigkeit bei Kurven
    c) Energy-Management-Anwendung, insbesondere zur Optimierung des Ladezyklus einer Batterie
    d) Start-Stop-Anwendung
    e) Situationswarneinrichtung, insbesondere zur Warnung vor Schulen und stark frequentierten Plätzen
    f) Anzeigeeinrichtung für bevorstehende Geschwindigkeitsbegrenzun-
    g) Spurhaltesystem
    h) Kreuzungsassistent
    i) Lichtkegelsteuerungseinrichtung
    j) "Advanced Shifting"-Einrichtung

11. Vorrichtung zur Verarbeitung von Fahrtinformationen in einem Fahrzeug, **dadurch gekennzeichnet, dass**
    diese zur Durchführung eines Verfahrens nach einem der vorhergehenden Ansprüche ausgebildet ist.

**Claims**

1. Method for processing trip information in a vehicle, wherein local positions of the vehicle are recorded while the vehicle is covering each trip itinerary and are processed to obtain data that characterize this trip itinerary, wherein the method has the following steps:

   allocation, for a predetermined itinerary network comprising separate itinerary segments that are separated from one another by nodes, of respective identifiers for each itinerary segment; and
   production of a data record following crossing of a node by the vehicle, wherein the data record comprises at least a first data field, which contains the identifier of the itinerary segment travelled by the vehicle before reaching the node, and a second data field, which contains the identifier of the itinerary segment travelled by the vehicle after reaching the node,
   wherein the data record is supplied to a database in which it is allocated to the itinerary segment travelled by the vehicle before reaching the relevant node,
   **characterized in that**
   while the vehicle is covering a trip itinerary a trip itinerary prediction is made by ascertaining, for each itinerary segment currently travelled by the vehicle, a subsequent itinerary segment that can be expected on the basis of the database from probability aspects, wherein
   the ascertainment of the subsequent itinerary segment that can be expected from probability aspects involves a probability being allocated to each of the data records used from the database.

2. Method according to Claim 1,
   **characterized in that**
   the data records stored in the database are managed independently of one another, so that they can be retrieved or evaluated independently of the respective trip itinerary for which they were produced during travel thereon.

3. Method according to Claim 1 or 2,
   **characterized in that**
   the data record furthermore comprises one or more further data fields that each contain a characteristic quantity for characterizing one of the following state parameters:

   a) current driver of the vehicle;
   b) time of day at which the relevant itinerary segment was travelled;
   c) day of the week on which the relevant itinerary segment was travelled;
   d) the frequency with which itinerary segments that can be reached from the relevant itinerary segment were each travelled in the past and/or the period of time that has elapsed since the itinerary segment was last travelled;
   e) direction indicator activity of the vehicle;
   f) tank content of the vehicle while travelling the itinerary segment;
   g) weather in which the relevant itinerary segment was travelled; and
   h) current traffic situation (presence of roadworks etc.).

4. Method according to one of Claims 1 to 3,
   **characterized in that**
   the data record furthermore comprises a count value as an additional data field, wherein the count value of a data record stored in the database is increased if the segment stored in the first data field and the subsequent segment stored in the second data field match a data record ascertained from a currently travelled route, wherein further conditions may be provided that additionally need to be satisfied for the count value to be increased.

5. Method according to Claim 4,
   **characterized in that**
   the count value of the data records is decreased on the basis of the age of the data records, wherein the relevant data record is erased if a prescribed threshold value for the count value is undershot.

6. Method according to one of Claims 1 to 5,
   **characterized in that**
   the ascertainment of the subsequent itinerary segment that can be expected from probability aspects involves the use of only those data records in the database for which the content of the first data field matches the identifier of the itinerary segment that the vehicle is currently travelling.

**7.** Method according to Claim 6,
**characterized in that**
the ascertainment of the subsequent itinerary segment that can be expected from probability aspects involves the use of only those data records in the database for which the content of the second data field matches the identifier of at least one itinerary segment that can be reached by the vehicle directly from the itinerary segment that the vehicle is currently travelling taking account of the current direction of travel.

**8.** Method according to Claim 6 or 7,
**characterized in that**
the ascertainment of the subsequent itinerary segment that can be expected from probability aspects involves each of the data records used from the database being allocated a probability (W) according to the rule

$$W = \sum_i p_i * \alpha_i \; ; \quad \sum_i \alpha_i = 1 \; ,$$

wherein each term $p_i * \alpha_i$ respectively indicates a probability value $p_i$ weighted with a weight value $\alpha_i$, the probability value $p_i$ being ascertained on the basis of a comparison of a data field of the respective data record used from the database with the corresponding data field of the itinerary segment that the vehicle is currently travelling.

**9.** Method according to one of the preceding claims,
**characterized in that**
the method is carried out regardless of whether a navigation system of the vehicle has been activated by the driver.

**10.** Method according to one of Claims 1 to 9,
**characterized in that**
at least one of the following applications is controlled on the basis of the trip itinerary prediction:

    a) cruise control,
    b) warning device for excessive speed on bends,
    c) energy management application, particularly for optimizing the charging cycle of a battery,
    d) start-stop application,
    e) situation warning device, particularly for warning about schools and heavily frequented spots,
    f) display device for imminent speed limits,
    g) lane departure warning system,
    h) intersection assistant,
    i) light beam control device,
    j) "advanced shifting" device.

**11.** Apparatus for processing trip information in a vehicle,
**characterized in that**
said apparatus is designed to carry out a method according to one of the preceding claims.

**Revendications**

**1.** Procédé de traitement d'informations de conduite dans un véhicule, dans lequel les positions locales du véhicule sont détectées pendant chaque déplacement du véhicule et des données qui caractérisent ce déplacement sont traitées,
le procédé comportant les étapes suivantes :

pour un réseau routier prédéterminé constitué de segments de route distincts séparés les uns des autres par des points de noeud, association d'une caractéristique à chaque segment de route et
formation d'un jeu de données après que le véhicule a dépassé un point de noeud, le jeu de données comportant au moins un premier champ de données qui contient la caractéristique du segment de route parcouru par le véhicule avant qu'il ait atteint le point de noeud et un deuxième champ de données qui contient la caractéristique du segment de route parcouru par le véhicule après qu'il a atteint le point de noeud,

le jeu de données étant amené à une base de données dans laquelle il est associé au segment de route parcouru par le véhicule avant qu'il ait atteint le point de noeud concerné,

**caractérisé en ce que**

pendant que le véhicule se déplace sur un parcours, une prévision de parcours est exécutée en déterminant pour chaque segment de route parcouru effectivement par le véhicule un segment de route suivant attendu sur la base de la base de données et de considérations de probabilité et
**en ce que** lors de la détermination du segment de route suivant attendu en fonction de considérations de probabilité, une probabilité est associée à chaque jeu de données extrait de la base de données.

2. Procédé selon la revendication 1, **caractérisé en ce que** les jeux de données conservés en mémoire dans la base de données sont gérés indépendamment les uns des autres de telle sorte qu'ils puissent être demandés ou évalués indépendamment du parcours sur lequel ils ont été formés.

3. Procédé selon les revendications 1 ou 2, **caractérisé en ce que** le jeu de données comporte en outre un ou plusieurs autres champs de données qui contiennent chacun une grandeur caractéristique qui caractérise l'un des paramètres d'état suivants :

   a) le conducteur actuel du véhicule,
   b) l'heure à laquelle le segment de route concerné a été parcouru,
   c) le jour de la semaine au cours duquel le segment de route concerné a été parcouru,
   d) la fréquence à laquelle chacun des segments de route qui peut être atteint depuis le segment de route concerné a été parcouru dans le passé et/ou la durée qui s'est écoulée depuis le dernier déplacement sur ce segment de route,
   e) l'activité de clignotement du véhicule,
   f) le contenu du réservoir du véhicule pendant que le segment de route est parcouru,
   g) les conditions météorologiques dans lesquelles le segment de route concerné a été parcouru et
   h) la situation actuelle du trafic (présence de chantiers, etc.).

4. Procédé selon l'une des revendications 1 à 3, **caractérisé en ce que** le jeu de données comporte en outre une valeur de comptage en tant que champ de données supplémentaire, la valeur de comptage d'un jeu de données conservé en mémoire dans la base de données étant augmentée si le segment conservé en mémoire dans le premier champ de données et le segment suivant conservé en mémoire dans le deuxième champ de données correspondent à un jeu de données déterminé provenant de l'itinéraire parcouru à ce moment, d'autres conditions qui doivent de plus être remplies pour que la valeur de comptage soit augmentée pouvant être prévues.

5. Procédé selon la revendication 4, **caractérisé en ce que** la valeur de comptage des jeux de données est diminuée en fonction de l'âge des jeux de données, le jeu de données correspondant à une valeur de comptage qui n'atteint plus une valeur de seuil prédéterminée étant effacé.

6. Procédé selon l'une des revendications 1 à 5, **caractérisé en ce que** lors de la détermination du segment de route suivant attendu selon les considérations de probabilité, seuls les jeux de données dont le contenu du premier champ de données correspond à la caractérisation du segment de route parcouru par le véhicule à ce moment sont extraits de la base de données.

7. Procédé selon la revendication 6, **caractérisé en ce que** lors de la détermination du segment de route suivant attendu selon les considérations de probabilité, seuls les jeux de données dont le contenu du deuxième champ de données correspond à la caractéristique d'au moins un segment de route qui peut être atteint directement par le véhicule à partir du segment de route que le véhicule parcourt à cet instant et en tenant compte de la direction de déplacement en cours est repris dans la base de données.

8. Procédé selon les revendications 6 ou 7, **caractérisé en ce que** lors de la détermination du segment de route suivant attendu selon les considérations de probabilité, une probabilité (W) est associée à chaque jeu de données extrait de la base de données selon la condition :

$$W = \sum_i \rho_i * \alpha_i \quad ; \quad \sum_i \alpha_i = 1$$

chaque terme $p_i*\alpha_i$ indiquant une valeur de probabilité $p_i$ pondérée par une valeur de pondération $\alpha_i$, la valeur de probabilité $p_i$ étant déterminée sur la base d'une comparaison entre un champ de données du jeu de données extrait à ce moment de la base de données et le champ de données correspondant du segment de route parcouru à cet instant par le véhicule.

9. Procédé selon l'une des revendications précédentes, **caractérisé en ce que** le procédé est exécuté qu'un système de navigation du véhicule soit activé ou non par le conducteur.

10. Procédé selon l'une des revendications 1 à 9, **caractérisé en ce que** sur la base de la prédiction d'itinéraire, au moins l'une des applications suivantes est commandée :

   a) "Tempomat",
   b) dispositif d'avertissement d'une vitesse excessive en virage,
   c) application de gestion d'énergie, en particulier en vue d'optimiser le cycle de charge d'une batterie,
   d) application démarrage-arrêt,
   e) dispositif d'avertissement de situation, en particulier pour avertir de la présence d'écoles ou d'emplacements très fréquentés,
   f) dispositif d'affichage des limitations de vitesse futures,
   g) système de maintien sur la bande de circulation,
   h) assistance à la traversée de carrefours,
   i) dispositif de commande du cône d'éclairage des phares et
   j) dispositif dit "Advanced Shifting" (changement de vitesse anticipé).

11. Dispositif de traitement d'informations de conduite dans un véhicule, **caractérisé en ce qu'**il est configuré pour exécuter un procédé selon l'une des revendications précédentes.

Fig. 1

15

## Fig. 2

EP 1 882 901 B1

SegID 2

SegID 1

SegID 4

SegID 3

SegID 5

| Datensatz | |
|---|---|
| SegID = 1 | |
| NextID = 2 | |

| Datensatz | |
|---|---|
| SegID = 1 | |
| NextID = 3 | |

| Datensatz | |
|---|---|
| Se | |
| Ne | |

| Datensatz | |
|---|---|
| Se | |
| Ne | |

| Datensatz | |
|---|---|
| Se | |
| Ne | |

| Datensatz | |
|---|---|
| Se | |
| Ne | |

| Datensatz | |
|---|---|
| SegID = 3 | |
| NextID = 5 | |

EP 1 882 901 B1

## Fig. 3

SegID 2

SegID 1

SegID 3

| SegID/Richtung |
|---|
| NextID |
| Fahrer |
| Tageszeit |
| Wochentag |
| Zählwert |

## Fig. 4

Laden der Datenbank — S10

Auswahl der Datensätze, die im Ausgangssegment SegID mit aktuellem Streckensegment übereinstimmen und deren Folgesegment NextID vom aktuellen Streckensegment erreichbar ist — S20

Zuordnen eines Wahrscheinlichkeitswertes

$$W := \sum_i p_i * \alpha_i \quad ; \quad \sum_i \alpha_i = 1$$

zu jedem Datensatz — S30

Auswahl des Datensatzes mit dem höchstem Wahrscheinlichkeitswert W als Zielsegment und Definition dieses Zielsegments als neues aktuelles Streckensegment — S40

Nein — Vorbestimmte Pfadlänge erreicht? — S50

Ja

Ende

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0697686 A2
- DE 19535576 A1
- EP 1380813 A1
- US 6256579 B1
- EP 1865287 A1
- EP 1551195 A1